# EUROPÄISCHE PATENTSCHRIFT

(11) **EP 0 698 210 B1**
(45) Veröffentlichungstag und Bekanntmachung des Hinweises auf die Patenterteilung: **18.12.1996**
(21) Anmeldenummer: 94914340.8
(22) Anmeldetag: 11.05.1994
(51) Int. Cl.: G01N 29/22, G01N 29/24

(54) **PRÜFEINRICHTUNG ZUR ZERSTÖRUNGSFREIEN WERKSTOFFPRÜFUNG**
TEST DEVICE FOR NON-DESTRUCTIVE MATERIALS TESTING
DISPOSITIF D'ESSAI PERMETTANT LE CONTROLE NON DESTRUCTIF DE MATERIAUX

(30) Priorität: 14.05.1993 DE 4316290
(43) Veröffentlichungstag der Anmeldung: 28.02.1996
(73) Patentinhaber: SIEMENS AKTIENGESELLSCHAFT, 80333 München (DE)
(72) Erfinder: ACHTZEHN, Hans-Jürgen, D-91325 Adelsdorf (DE)
(86) Internationale Anmeldenummer: DE9400543
(87) Internationale Veröffentlichungsnummer: WO9427143

(56) Entgegenhaltungen:
- EP-A- 0 000 259
- EP-A- 0 450 334
- EP-A- 0 452 516
- GB-A- 2 255 825

## Beschreibung

Die Erfindung bezieht sich auf eine Prüfeinrichtung zur zerstörungsfreien Werkstoffprüfung.

Bei der Überwachung von sicherheitsrelevanten Anlagenteilen in Kraftwerksanlagen oder in Anlagen der technischen Chemie ist es in vielen Fällen erforderlich, diese Anlagenteile vor Ort im eingebauten Zustand mit Verfahren der zerstörungsfreien Werkstoffprüfung zu untersuchen. So müssen beispielsweise in kerntechnischen Anlagen regelmäßig Schweißnähte oder Befestigungselemente, beispielsweise Kernumfassungsschrauben, mit denen im Reaktordruckbehälter eines Kernreaktors das Kerngerüst in der Kernumfassung befestigt ist, einer Ultraschallprüfung unterzogen werden.

Die hierzu verwendeten Prüfeinrichtungen enthalten einen für die jeweilige Prüfaufgabe speziell angepaßten und gestalteten Prüfkopf, wie er beispielsweise für die Ultraschallprüfung von Kernumfassungsschrauben in der europäischen Patentanmeldung 0 452 516 offenbart ist. Dieser Prüfkopf wird von einem geeignet konstruierten Manipulator ferngesteuert in zum Teil schwer zugängliche Prüfpositionen gebracht. Seine exakte Positionierung wird dabei in der Regel mit Hilfe einer Fernsehkamera durchgeführt, die am Manipulator in seiner Nähe angeordnet ist und eine visuelle Kontrolle seiner Positionierung ermöglicht. In der Regel reicht dabei eine einzige Kamera nicht aus, sondern es müssen zur exakten Erfassung der räumlichen Position des Prüfkopfes mehrere Kameras seitlich um ihn herum angeordnet werden. Dies erfordert aber einen hohen Platzbedarf in unmittelbarer Umgebung des Prüfkopfes, so daß eine Verwendung der gesamten Prüfeinrichtung in schwer zugänglichen Prüfpositionen oder unter beengten räumlichen Verhältnissen erschwert oder unmöglich gemacht ist.

Der Erfindung liegt nun die Aufgabe zugrunde, eine Prüfeinrichtung zur zerstörungsfreien Werkstoffprüfung anzuceben, deren Prüfkopf auch unter räumlich beengten Verhältnissen einfach und sicher ferngesteuert positioniert werden kann.

Die genannte Aufgabe wird gelöst mit den Merkmalen des Patentanspruches 1. Eine Prüfeinrichtung zur zerstörungsfreien Werkstoffprüfung gemäß der Erfindung umfaßt einen Prüfkopf, der eine an die Oberfläche eines Prüflings anlegbare Koppelfläche zum Einkoppeln elektrischer oder akustischer Prüfsignale in den Prüfling umfaßt, wobei im Bereich dieser Koppelfläche zur optischen Kontrolle der Positionierung des Prüfkopfes die Stirnfläche eines freien Endes eines Lichtleiterkabels eines Endoskops angeordnet ist. Durch die Verwendung einer Prüfeinrichtung mit einem Prüfkopf in dem ein Lichtleiterkabel eines Endoskops integriert ist, ist bei geringem Platzbedarf eine sichere optische Kontrolle der richtigen Positionierung des Prüfkopfes möglich.

In einer bevorzugten Ausführungsform der Erfindung weist die Koppel fläche eine Öffnung auf, die mit der Stirnfläche des Lichtleiterkabels fluchtet. Dadurch kann die Koppelfläche exakt auf einem vorgegebenen Meßpunkt aufgesetzt werden.

Um eine Beschädigung der Stirnfläche des Lichtleiterkabels zu vermeiden, ist diese vorzugsweise gegenüber der Koppel fläche ins Innere des Prüfkopfes zurückversetzt angeordnet.

Insbesondere ist bei einem Ultraschall-Prüfkopf das Lichtleiterkabel mit seinem freien Ende in einem zur Ankopplung an die Oberfläche des Prüflings vorgesehenen Vorlaufkörper eingebettet.

In einer besonders bevorzugten Ausgestaltung eines für die Schraubenprüfung geeigneten Prüfkopfes sind mehrere das Lichtleiterkabel umgebende Ultraschallwandler vorgesehen. In einer weiteren vorteilhaften Ausführungsform ist ein das

Lichtleiterkabel umgebender ringförmiger Ultraschallwandler vorgesehen.

Zur Erläuterung der Erfindung wird auf die Ausführungsbeispiele der Zeichnung verwiesen, in deren

Figur 1 ein für die Prüfung von Schrauben geeigneter Ultraschall-Prüfkopf gemäß der Erfindung in einem Längsschnitt veranschaulicht ist.

Figur 2 zeigt eine weitere vorteilhafte Ausgestaltung eines Ultraschall-Prüfkopfes in einem Querschnitt.

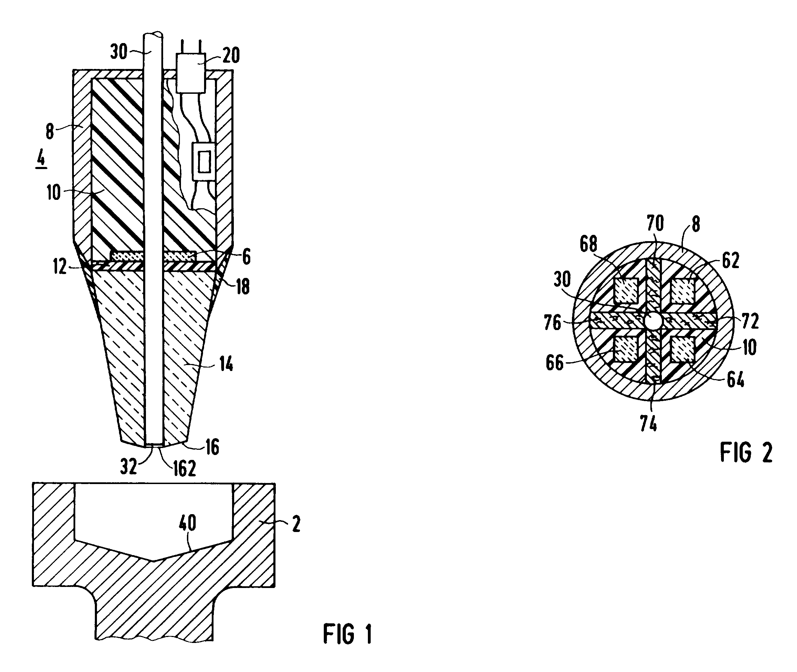

In der **Figur 1** ist ein Ultraschall-Prüfkopf 4 einer Prüfeinrichtung unmittelbar vor seiner Positionierung auf einem Prüfling 2 dargestellt. Der Ultraschall-Prüfkopf 4 enthält einen ringförmigen, vorzugsweise piezokeramischen Ultraschallwandler 6, der innerhalb eines Gehäuses 8 zwischen einem beispielsweise aus einer Mischung von Epoxidharz, Titanoxid TiO₂ und Gummimehl bestehenden Dämpfungskörper 10 und einer ebenfalls ringförmig gestalteten Anpassungsschicht 12, vorzugsweise eine λ/4-Anpassungsschicht, eingebettet ist. An die Anpassungsschicht 12 schließt sich als Vorlaufstrecke ein im wesentlichen kegelstumpfförmiger, vorzugsweise aus Polymethylmethacrylat PMMA bestehender Vorlaufkörper 14 an, der an seiner vom Ultraschallwandler 6 abgewandten Koppel fläche 16 der geometrischen Gestalt der Oberfläche 40 des Prüflings 2, im Beispiel der Figur die Kegelmantelfläche 40 einer Innenmehrkantschraube, angepaßt ist.

Zum Vermeiden einer seitlichen Abstrahlung der vom Ultraschallwandler 6 erzeugten Ultraschallwellen, ist der Vorlaufkörper 14 im Bereich seiner an der Anpassungsschicht 12 anliegenden Stirnfläche mit einem konischen Dämpfungsring 18 versehen.
Am Gehäuse 8 des Ultraschall-Prüfkopfes 4 ist eine elektrische Anschlußbuchse 20 angeordnet, deren elektrische Kontakte über einen elektrischen Schaltkreis 22 zur Impedanzanpassung mit einander gegenüberliegenden Elektrodenflächen des Ultraschallwandlers 6 verbunden ist.

Der Vorlaufkörper 14 ist längs seiner Mittenachse mit einer durchgehenden zylindrischen Aussparung versehen, so daß die Koppelfläche 16 eine Öffnung 162 aufweist. Die zylindrische Aussparung fluchtet mit den ebenfalls zylindrischen Aussparungen des ringförmigen Ultraschallwandlers 6 und der Anpassungsschicht 12 fluchtet. In diese Aussparungen ist das freie Ende eines Lichtleiterkabels 30 eines Endoskops eingebettet, dessen Stirnfläche 32 in der Öffnung 162 der Koppelfläche 16 angeordnet ist. Die Stirnfläche 32 ist gegenüber der Koppelfläche 16 des Vorlaufkörpers 14 geringfügig zurückgesetzt, um ihre Beschädigung beim Aufsetzen des Vorlaufkörpers 14 auf die Oberfläche 40 des Prüflings 2 zu verhindern. Das Lichtleiterkabel 30 ist durch das Gehäuse 8 des Prüfkopfes 4 geführt und dort im Dämpfungskörper 10 eingebettet, mit dem die Hohlräume innerhalb des Gehäuses 8 ausgegossen sind.

Durch die Anordnung der Stirnfläche 32 des Lichtleiterkabels 30 in der Mitte der Koppel fläche 16 ist eine exakte Positionierung des Ultraschall-Prüfkopfes 4 erleichtert, da die Bildmitte des vom Endoskop in einem Monitor erzeugten Bildes exakt mit der Mitte des Ultraschall-Prüfkopfes 4 übereinstimmt.

Das Lichtleiterkabel 30 trägt in an sich bekannter Weise mehrere Lichtleitfasern zur Bildübertragung. Außerdem sind in das Lichtleiterkabel 30 optische Übertragungselemente zur Beleuchtung des vom Endoskop erfaßten Sichtbereiches integriert.

Anstelle eines ringförmigen Ultraschallwandlers 6 können auch mehrere, beispielsweise zwei oder vier, Einzelwandler vorgesehen sein, die symmetrisch um eine Mittenachse des Ultraschall-Prüfkopfes 4 angeordnet sind. Im Beispiel der **Figur 2** sind vier rechteckige Einzelwandler 62, 64, 66 und 68 vorgesehen, die symmetrisch um das Lichtleiterkabel 30 angeordnet sind. Zwischen den Einzelwandlern 62, 64, 66 und 68 können in Analogie zu den aus der EP-A-0 452 516 bekannten Prüfköpfen zur Übersprechdampfung Trennschichten 70, 72, 74 und 76 aus Kork vorgesehen sein.

Die anhand von Ultraschall-Prüfköpfen erläuterten Ausführungsbeispiele lassen sich in analoger Weise auch auf andere Ultraschall-Prüfköpfe oder Wirbelstrom-Prüfköpfe übertragen. Durch die unmittelbare Einbettung des Lichtleiterkabels eines Endoskops in den jeweils verwendeten Prüfkopf wird die Überwachung seiner Positionierung ermöglicht, ohne daß eine zusätzliche Installation von separaten Videokameras mit hohem Platzbedarf erforderlich ist.

## Patentansprüche

1. Prüfeinrichtung zur zerstörungsfreien Werkstoffprüfung mit einem Prüfkopf (4), der eine an die Oberfläche (40) eines Prüflings (2) anlegbare Koppelfläche (16) zum Einkoppeln elektrischer oder akustischer Prüfsignale in den Prüfling (2) umfaßt, dadurch gekennzeichnet, daß im Bereich dieser Koppelfläche (16) zur optischen Kontrolle der Positionierung des Prüfkopfes (4) die Stirnfläche (32) eines freien Endes eines Lichtleiterkabels (30) eines Endoskops angeordnet ist.

2. Prüfeinrichtung nach Anspruch 1, **dadurch gekennzeichnet,** daß die Koppelfläche (16) eine Öffnung (162) aufweist, die mit der Stirnfläche (32) des Lichtleiterkabels (30) fluchtet.

3. Prüfeinrichtung nach Anspruch 2, **dadurch gekennzeichnet,** daß die Stirnfläche (32) gegenüber der Koppelfläche (16) ins Innere des Prüfkopfes (4) zurückversetzt angeordnet ist.

4. Prüfeinrichtung nach Anspruch 3, **dadurch gekennzeichnet,** daß das Lichtleiterkabel (30) mit seinem freien Ende in einem zur Ankopplung an die Oberfläche (40) des Prüflings (2) vorgesehenen Vorlaufkörper (14) eines Ultraschall-Prüfkopfes (4) eingebettet ist.

5. Prüfeinrichtung nach einem der vorhergehenden Ansprüche mit einem oder mehreren das Lichtleiterkabel (30) umgebenden Ultraschallwandler (6) bzw. Ultraschallwandlern (62, 64, 66, 68).

6. Prüfeinrichtung nach Anspruch 5, **dadurch gekennzeichnet,** daß ein das Lichtleiterkabel (30) umgebender ringförmiger Ultraschallwandler (6) vorgesehen ist.

## Claims

1. Testing device for non-destructive material testing with a probe (4) which comprises a coupling area (16), which can be applied to the surface (40) of a test object (2), for injecting electric or acoustic test signals into the test object (2), characterized in that in the region of this coupling area (16) for the optical control of the positioning of the probe (4) the frontal area (32) of a free end of an optical-fibre cable (30) of an endoscope is arranged.

2. Testing device according to claim 1, characterized in that the coupling area (16) has an opening (162) which is in alignment with the frontal area (32) of the optical-fibre cable (30).

3. Testing device according to claim 2, characterized in that the frontal area (32) is arranged relative to the coupling area (16) set back in the interior of the probe (4).

4. Testing device according to claim 3, characterized in that the optical-fibre cable (30) is embedded with its free end in a leading body (14) of an ultrasonic probe (4) provided for coupling to the surface (40) of the test object (2).

5. Testing device according to one of the preceding claims having one or more ultrasonic transducers (6) or ultrasonic transducers (62, 64, 66, 68) surrounding the optical-fibre cable (30).

6. Testing device according to claim 5, characterized in that an annular ultrasonic transducer (6) surrounding the optical-fibre cable (30) is provided.

## Revendications

1. Dispositif de contrôle non destructif de matériaux, comprenant un palpeur (4), qui comporte une surface de couplage (16) pouvant être appliquée à la surface (40) d'un échantillon (2), pour introduire, dans l'échantillon (2), des signaux d'essai électriques ou acoustiques, caractérisé par le fait qu'il est disposé, dans la zone de cette surface de couplage (16), pour le contrôle optique du positionnement du palpeur (4), la surface frontale (32) d'une extrémité libre d'un câble à guide de lumière (30) d'un endoscope.

2. Dispositif de contrôle selon la revendication 1, caractérisé par le fait que la surface de couplage (16) présente une ouverture (162), qui est en alignement avec la surface frontale (32) du câble à guide de lumière (30).

3. Dispositif de contrôle selon la revendication 2, caractérisé par le fait que la surface frontale (32) est disposée en retrait, à l'intérieur du palpeur (4), par rapport à la surface de couplage (16).

4. Dispositif de contrôle selon la revendication 3, caractérisé par le fait que le câble à guide de lumière (30) est inséré, par son extrémité libre, dans un avant-corps (14) d'un palpeur à ultrasons (4), prévu pour le couplage à la surface (40) de l'échantillon (2).

5. Dispositif de contrôle selon l'une des revendications précédentes, comportant un transducteur à ultrasons (6) ou plusieurs transducteurs à ultrasons (62, 64, 66, 68) entourant le câble à guide de lumière (30).

6. Dispositif de contrôle selon la revendication 5, caractérisé par le fait qu'il est prévu un transducteur à ultrasons (6), de forme annulaire, entourant le câble à guide de lumière (30).
